# EUROPEAN PATENT SPECIFICATION

(11) **EP 1 201 515 B1**
(45) Date of publication and mention of the grant of the patent: **15.08.2007**
(21) Application number: 00203674.7
(22) Date of filing: 23.10.2000
(51) Int. Cl.: B60S 1/38

(54) **Windshield wiper**
Scheibenwischer
Essuie-glace

(43) Date of publication of application: 02.05.2002
(73) Proprietor: Federal-Mogul S.A., 6790 Aubange (BE)
(72) Inventor: Boland, Xavier, 6700 Arlon (BE); Orjela, Gurdev, 6700 Arlon (BE); Roussel, Gerald, 6730 Saint-Vincent (BE)
(74) Representative: Hooiveld, Arjen Jan Winfried

(56) References cited:
- US-A- 3 566 432
- US-A- 3 785 002

## Description

The invention relates to a windshield wiper comprising an oscillating arm and a frame connected thereto for receiving a wiper blade, wherein the wiper blade comprises a body portion and a downwardly extending wiping lip for wiping the upper surface of a windshield, said wiping lip being connected to said body portion through two connecting pieces at least partially surrounding a hollow space, seen in cross-section. The invention also refers to a wiper blade suitable for use in a windshield wiper according to the invention.

Such a windshield wiper is known from German patent publication no. 198.27.032 (US 6 230 0358 B1) in the name of Asmo Co. Deformation of the T-shaped hollow space extending vertically from the main portion of this known windshield wiper to the wiping lip thereof prevents differences in height of the windshield wiper due to reversal of (the angle of inclination of) the wiping lip during its wiping action, whilst said deformation ensures a suitable angle of inclination at all times.

A drawback of the windscreen wiper as known from the above German patent document is that each connecting piece thereof is severely bent and therefore charged with pressure and tension loads during a wiping action, resulting in high stresses in the surface of each connecting piece: ultimately, the resistance against environmental influences, such as high temperatures, temperature changes, ozone and/or UV radiation, for example, will deteriorate and ageing will ensue. A further drawback is that dust, snow, ice etcetera can penetrate into the small grooves between the body portion and the wiping lip of this known windshield wiper, causing blocking of the wiping action of the wiping lip and thus malfunction of said windshield wiper. Finally, it has become apparent in practice that reversal of (the angle of inclination of) the wiping lip during its wiping action takes more time than anticipated, with all its disadvantages involved.

It is the object of the invention to provide a windscreen wiper wherein the aforesaid drawbacks of the prior art are overcome, that is, wherein an effective windscreen wiper is provided that is resistant against all kind of weather influences, such as (high) temperatures (changes) and ice/snow. In order to accomplish that objective, a windscreen wiper of the kind referred to in the preamble is characterized in that said connecting pieces remain at least substantially straight at all times during operation of the wiper blade, wherein the major hinge point for the wiping lip is located at a position below the hollow space and the connecting pieces. Consequently, the connecting pieces will not be forced to a bending operation, wherein, during a wiping action, one of said connecting pieces is charged (at least substantially) with a pressure load in its longitudinal direction and the other connecting piece is charged (at least substantially) with a tension load in its longitudinal direction, and vice versa, when the wiping action is reversed. All this results in reduced surface tensions in both connecting pieces and thus in an extended life of the wiper blade.

It is noted that the invention also relates to a windscreen wiper wherein the oscillating arm and the frame are constructed as one part. The invention is not restricted to use with passenger cars for that matter, but it can also be used with trains and other (fast) vehicles.

In one preferred embodiment of a windscreen wiper according to the invention, said connecting pieces have a width varying between 0,1 mm and 0,4 mm, preferably between 0,2 mm and 0,3 mm.

In another preferred embodiment of a windscreen wiper according to the invention, said connecting pieces enclose an internal angle varying between 15° and 90°, preferably between 30° and 60°.

In another preferred embodiment of a windscreen wiper according to the invention, the hollow space has a cross-section that is at least substantially circular, elliptical, triangular or T-shaped.

It is also an object of the invention to provide a wiper blade for such a windshield wiper as defined in claim 5.

The invention will be explained in more detail hereafter with reference to figures illustrated in a drawing, wherein
- figure 1 is a perspective view of a windshield wiper according to the invention;
- figure 2 is an enlarged and elevational view showing an embodiment of a wiper blade in accordance with the invention during a wiping action in one direction (figure 2a), in reversed direction (figure 2c), as well as in relaxed position (figure 2b); and
- figure 3 corresponds to figure 2, with its difference that it relates to an embodiment of a prior art wiper blade.

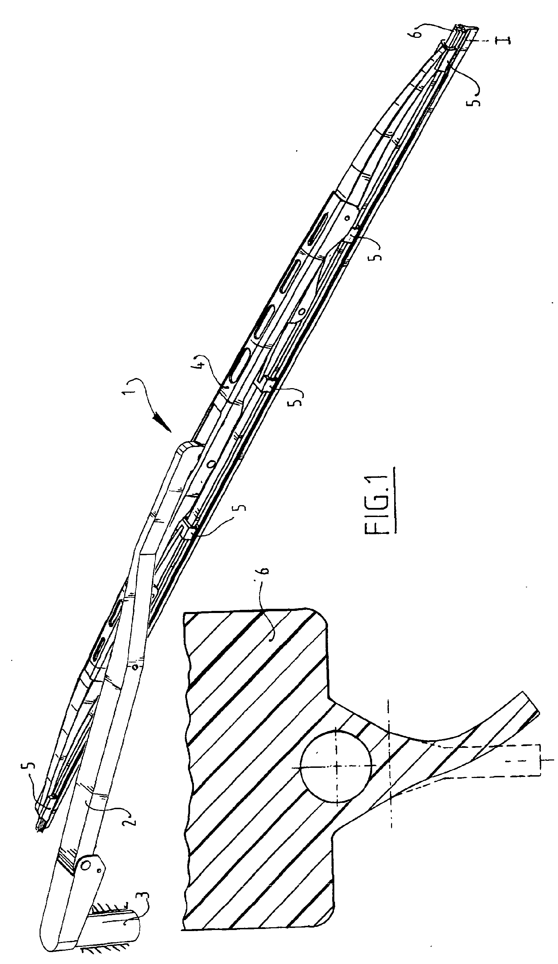

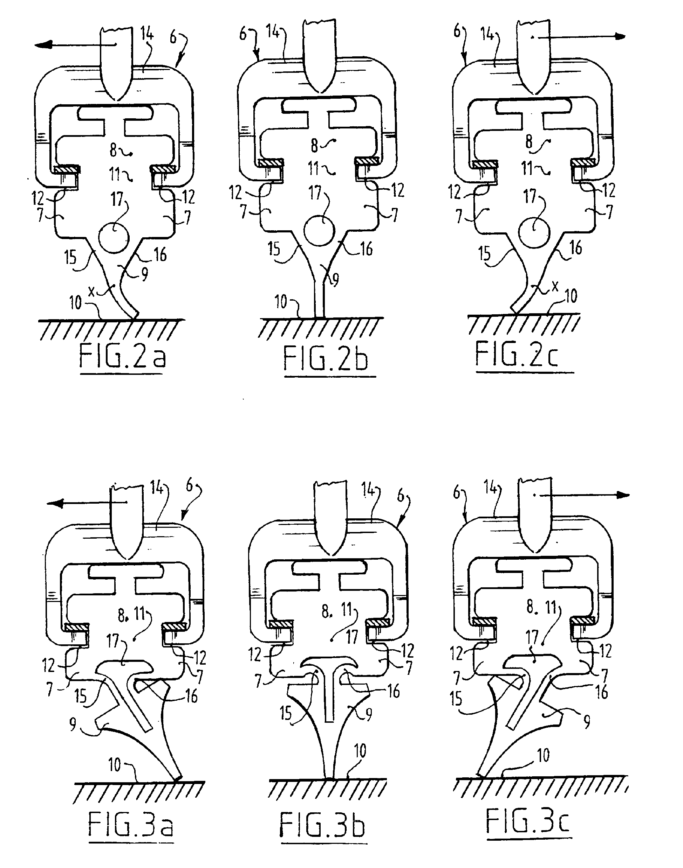

Figure 1 shows a perspective view of a windshield wiper 1 according to the invention, representing an oscillating arm 2 mounted on a mounting head 3, as well as a frame 4 connected to the oscillating arm 2 and having several claws 5 for receiving an elongate wiper blade or squeegee 6. The wiper blade 6 is shown in cross-section on the left in figure 1 in relaxed position (dashed lines) and in wiping position full lines, as will be elucidated further with the help of figure 3. The wiper blade 6 has a uniform cross-section and is preferably extruded from an elastomeric material. The term "elastomeric material" is understood to include natural rubber and natural rubber compositions, as well as synthetic polymers and compositions having rubberlike properties, such as butyl rubber, polyurethane rubber, silicone rubber and the like. The wiper blades 6 is integrally formed from such an elastomeric material.

The wiper blade 6 in accordance with the invention as shown in figure 2 has a main body portion 7, a mounting portion 8, as well as a wiping lip 9 for wiping the upper surface 10 of a windscreen of a vehicle. The mounting portion 8 is defined by a restricted neck 11 between longitudinal grooves 12 at opposite sides of the mounting portion 8, and by an enlarged head 13 above the grooves 12. The lower edges of the grooves 12 provide shoulders, while the grooves 12 are adapted to receive mounting elements, such as claws 14, of the conventional wiper blade superstructure, which therefore need not to be referred to in detail here. Said downwardly extending wiping lip 9 is connected to said main body portion 7 through two connecting pieces 15,16 at least partially surrounding a hollow space 17, all seen in cross-section. The connecting pieces 15,16 are at least substantially straight, i.e. are not forced to bend at any time during operation of the wiper blade 6. During a wiping action, said connecting pieces 15,16 are able to absorb pressure or tension loads in their longitudinal direction d1 and d2, respectively, depending on the wiping direction under the influence of right and left oscillating forces, without being forced to bend, as will be explained further with the help of figures 2a and 2b.

Figure 2a shows a position of the wiper blade 6 in one wiping direction indicated with an arrow, under influence of a left oscillating force, for example.
As shown, said connecting piece 15 is not forced to a bending operation, while it is only loaded with a tension load in its longitudinal direction d1. At the same time the other connecting piece 16 is only loaded with a pression load in its longitudinal direction d2, not being forced to bend either. Figure 2c shows a position of the wiper blade 6 in the other wiping direction again indicated with an arrow, when a right oscillating force is applied, for example. Again both connecting pieces 15,16 are straight, whilst a pressure load is exerted on connecting piece 15 in its longitudinal direction d1 and a tension load is exerted on the connecting piece 16 in its longitudinal direction d2. In accordance with the invention the major hinge point for the wiping lip 6 is located at position X below the hollow space 17 and the connecting pieces 15,16. As both connecting pieces 15,16 remain straight at all times during operation of the wiper blade 6, no small grooves between the body portion 7 and the wiping lip 9 are formed: the smooth outer surfaces of said connecting pieces 15,16 will prevent dirt, ice or snow etcetera from accumulating between said body portion 7 and the wiping lip 9, so that the wiper blade 6 is not blocked thereby during its wiping actions. Figure 2b shows the wiper blade 6 in relaxed position, without any oscillating forces being applied thereon.

Figures 3a, 3b, 3c correspond with figure 2a, 2b, 2c, respectively, on the understanding that figure 3 refers to an embodiment of a wiper blade according to German patent application no. 198.27.032 mentioned earlier, wherein corresponding reference numerals have been used. As can be seen from figure 3a, during a wiping action under influence of a left oscillating force, the inner surface of the connecting piece 15 facing towards the hollow space 17 is loaded with a pressure load, whereas the outer surface thereof facing away from the hollow space 17 is loaded with a tension load. Simultaneously, the inner surface of the connecting piece 16 facing towards the hollow space 17 is loaded with a tension load, and its outer surface facing away from the hollow space 17 is loaded with a pressure load. This all leads to high stresses in the surface material of both connecting pieces 15,16 thereby deteriorating the rubber quality. Figure 3c refers to the other situation where as right oscillating force is applied on this prior art wiper blade 6. In figure 3b the known wiper blade 6 its shown in relaxed position.

The invention being thus described, it will be obvious that the same may be varied in many ways. Such variations are not to be regarded as a departure from the spirit and scope of the invention, and all such modifications as would be obvious to one skilled in the art are intended to be included in the scope of the appended claims, provided the invention remains defined in in the claims

## Claims

1. Windshield wiper (1) comprising an oscillating arm (2) and a frame (4) connected thereto for receiving a wiper blade (6), wherein the wiper blade (6) comprises a body portion (7) and a downwardly extending wiping lip (9) for wiping the upper surface (10) of a windshield, said wiping lip (9) being connected to said body portion (7), through two connecting pieces (15,16) at least partially surrounding a hollow space (17), seen in cross-section, **characterized in that** said connecting pieces (15,16) remain at least substantially straight at all times during operation of the wiper blade (6), wherein the major hinge point for the wiping lip (9) is located at a position (X) below the hollow space (17) and the connecting pieces (15,16).

2. Windshield wiper (1) according to claim 1, wherein said connecting pieces (15,16) have a width varying between 0,1 mm and 0,4 mm, preferably between 0,2 mm and 0,3 mm.

3. Windshield wiper (1) according to claim 1 or 2, wherein said connecting pieces (15,16) enclose an internal angle varying between 15° and 90°, preferably between 30° and 60°.

4. Windshield wiper (1) according to claim 1, 2 or 3, wherein the hollow space (17) has a cross-section that is at least substantially circular, elliptical, triangular or T-shaped.

5. Wiper blade (6) for a windshield wiper (1) according to any of the preceding claims 1-4, wherein the wiper blade (6) comprises a body portion (7) and a downwardly extending wiping lip (9) for wiping the upper surface (10) of a windshield, said wiping lip (9) being connected to said body portion (7) through two connecting pieces (15,16) at least partially surrounding a hollow space (17), seen in cross-section, **characterized in that** said connecting pieces (15,16) remain at least substantially straight at all times during operation of the wiper blade (6), wherein the major hinge point for the wiping lip (9) is located at a position (X) below the hollow space (17) and the connecting pieces (15,16).

## Patentansprüche

1. Windschutzscheibenwischer (1), der einen Schwingarm (2) und einen Rahmen (4), der daran befestigt ist, um ein Scheibenwischerblatt (6) aufzunehmen, umfasst, wobei das Scheibenwischerblatt (6) einen Körperabschnitt (7) und eine sich nach unten erstreckende Wischerlippe (9) zum Wischen der Oberfläche (10) einer Windschutzscheibe umfasst, wobei die Wischerlippe (9) mit dem Körperabschnitt (7) über zwei Verbindungsteile (15, 16), die teilweise einen Hohlraum (17) umgeben, im Querschnitt gesehen, verbunden ist, **dadurch gekennzeichnet, dass** die Verbindungsteile (15, 16) jederzeit während des Betriebes des Scheibenwischerblattes (6) wenigstens im Wesentlichen gerade bleiben, wobei der Hauptschwingpunkt für die Wischerlippe (9) an einer Position (x) unterhalb des Hohlraumes (17) und der Verbindungsteile (15, 16) angeordnet ist.

2. Windschutzscheibenwischer (1) nach Anspruch 1, wobei die Verbindungsteile (15, 16) eine Breite aufweisen, die zwischen 0,1 mm und 0,4 mm, vorzugsweise zwischen 0,2 mm und 0,3 mm, beträgt.

3. Windschutzscheibenwischer (1) nach Anspruch 1 oder Anspruch 2, wobei die Verbindungsteile (15, 16) einen Innenwinkel, der zwischen 15 Grad und 90 Grad, vorzugsweise zwischen 30 Grad und 60 Grad, beträgt, umschließen.

4. Windschutzscheibenwischer (1) nach Anspruch 1, 2 oder 3, wobei der Hohlraum (17) einen Querschnitt aufweist, der wenigstens im Wesentlichen kreisförmig, elliptisch, dreieckig oder T-förmig ist.

5. Scheibenwischerblatt (6) für einen Windschutzscheibenwischer (1) nach einem der vorhergehenden Ansprüche 1 bis 4, wobei das Scheibenwischerblatt (6) einen Körperabschnitt (7) und eine sich nach unten erstreckende Wischerlippe (9) zum Wischen der Oberscheibe (10) einer Windschutzscheibe umfasst, wobei die Wischerlippe (9) über zwei Verbindungsteile (15, 16), die wenigstens teilweise einen Hohlraum (17) umschlie0en, im Querschnitt gesehen, mit dem Körperabschnitt (7) verbunden sind, **dadurch gekennzeichnet, dass** die Verbindungsteile (15, 16) jederzeit während des Betriebes des Scheibenwischerblattes (6) im Wesentlichen gerade bleiben, wobei der Hauptschwingpunkt für die Wischerlippe (9) an einer Position (x) unterhalb des Hohlraumes (17) und der Verbindungsteile (15, 16) angeordnet ist.

## Revendications

1. Essuie-glace comprenant un bras oscillant (2) et une armature (4) reliée à ce bras pour recevoir une raclette d'essuie-glace (6), dans lequel la raclette essuie-glace (6) comprend une portion corps (7) et une lèvre d'essuyage (9) s'étendant vers le bas, pour essuyer la surface supérieure (10) d'un pare-brise, ladite lèvre d'essuyage (9) étant reliée à ladite portion corps (7) par l'intermédiaire de deux pièces de liaison (15, 16), entourant au moins partiellement un espace creux (17), dans une vue en coupe, **caractérisé en ce que** lesdites pièces de liaison (15, 16) restent au moins à peu près droites à tout moment pendant le fonctionnement de la raclette d'essuyage (6), le point principal d'articulation pour la lèvre d'essuyage (9) étant placé à une position (X) située au-dessous de l'espace creux (17) et des pièces de liaison (15, 16).

2. Essuie-glace (1) selon la revendication 1, dans lequel lesdites pièces de liaison (15, 16) ont une largeur qui varie entre 0,1 mm et 0,4 mm, de préférence entre 0,2 mm et 0,3 mm.

3. Essuie-glace (1) selon la revendication 1 ou 2, dans lequel lesdites pièces de liaison (15, 16) enferment un angle intérieur qui varie entre 15° et 90°, de préférence entre 30° et 60°.

4. Essuie-glace (1) selon la revendication 1, 2 ou 3, dans lequel l'espace creux (17) a une section transversale qui est au moins à peu près circulaire, elliptique, triangulaire ou en forme de T.

5. Raclette d'essuie-glace (6) pour un essuie-glace (1) selon une quelconque des revendications précédentes 1-4, dans laquelle la raclette d'essuyage (6) comprend une portion corps (7) et une lèvre d'essuyage (9) s'étendant vers le bas, pour essuyer la surface supérieure (10) d'un pare-brise, ladite lèvre d'essuyage (9) étant reliée à ladite portion corps (7) par l'intermédiaire de deux pièces de liaison (15, 16) qui entourent au moins partiellement un espace creux (17), dans une vue en coupe transversale, **caractérisée en ce que** lesdites pièces de liaison (15, 16) restent au moins à peu près droites à tout moment pendant le fonctionnement de la raclette d'essuie-glace (6), dans lequel le principal point d'articulation pour la lèvre d'essuyage est placé à une position (X) située au-dessous de l'espace creux (17) et des pièces de liaison (15, 16).
